**Europäisches Patentamt**

**European Patent Office**

**Office européen des brevets**

(19)

(11) Veröffentlichungsnummer: **0 072 390**
**B1**

(12) **EUROPÄISCHE PATENTSCHRIFT**

(45) Veröffentlichungstag der Patentschrift:
**19.02.86**

(51) Int. Cl.⁴: **B 01 J 32/00, B 01 J 37/00,**
**B 01 J 21/06, B 01 J 21/08**

(21) Anmeldenummer: **82103404.8**

(22) Anmeldetag: **22.04.82**

(54) Verfahren zur Herstellung von Presslingen aus pyrogen herstellten Oxiden.

(30) Priorität: **19.08.81 DE 3132674**

(43) Veröffentlichungstag der Anmeldung:
**23.02.83 Patentblatt 83/8**

(45) Bekanntmachung des Hinweises auf die Patenterteilung:
**19.02.86 Patentblatt 86/8**

(84) Benannte Vertragsstaaten:
**AT BE CH DE FR GB IT LI LU NL SE**

(56) Entgegenhaltungen:
**FR - A - 2 313 973**
**FR - A - 2 354 302**
**GB - A - 927 535**
**US - A - 3 033 801**

(73) Patentinhaber: **Degussa Aktiengesellschaft,**
**Weissfrauenstrasse 9, D-6000 Frankfurt am Main 1 (DE)**

(72) Erfinder: **Ettlinger, Manfred, Dr., In der Gartei 19,**
**D-6458 Rodenbach (DE)**
Erfinder: **Ferch, Horst, Dr., Justus von Liebig Strasse 13,**
**D-6454 Bruchköbel (DE)**
Erfinder: **Koth, Detlev, Dr., Im Proli 28,**
**D-7889 Grenzach-Wyhlen 1 (DE)**
Erfinder: **Simon, Edgar, Bergstrasse 24,**
**D-6463 Freigericht-Neuses (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung von Presslingen aus pyrogen hergestellten Oxiden von Metallen und/oder Metalloiden.

Diese Oxide sind hochrein und extrem feinteilig. Die mittleren Primärteilchengrössen (DIN 53 206) liegen in der Regel zwischen 7 und 40 μm. Die hohe Reinheit, das Fehlen von Poren und die weitgehend chemische Indifferenz haben die pyrogen hergestellten Oxide als Träger für Katalysatoren interessant gemacht. Beispiele für diese Anwendung sind in der wissenschaftlichen Literatur seit langem bekannt [s. Übersicht in Chem. Ing. Techn., 52 (1980) 628–634]. In allen Fällen wurde jedoch das pyrogen hergestellte Oxid in Pulverform eingesetzt.

Bisher war es nämlich nicht möglich, Presslinge aus hochdispersen, pyrogenen Oxiden herzustellen, die aufgrund ihrer inneren Oberfläche und ihrer mechanischen Festigkeit als Katalysatorträger geeignet gewesen wären.

Es ist zwar aus der DE-A 2 625 705 ein Verfahren zur Herstellung eines pelletförmigen Katalysatorträgers bekannt, das dadurch gekennzeichnet ist, dass ein geformtes Produkt aus einer Mischung von feinteiligem Siliciumdioxidpulver und kolloidalem Siliciumdioxid zur Aushärtung erhitzt wird. Bei dem eingesetzten Siliciumdioxidpulver handelt es sich jedoch um Kieselsäure, die Teilchengrössen von 0,5–100 μm aufweist.

Versuche, dieses Verfahren auf pyrogen hergestellte Metall- bzw. Metalloidoxide mit einer Teilchengrösse von 7–40 μm anzuwenden, sind in Chem. Ing. Techn. 52 (1980) 633–634 beschrieben.

Dieses Verfahren hat jedoch den Nachteil, dass z.B. aus einer pyrogenen Kieselsäure (Aerosil 200®) nur Pellets mit einer maximalen Bruchfestigkeit von 4,3 kp (42,2 N) gefertigt werden konnten. Ein zusätzlicher Nachteil ist, dass gegenüber dem Ausgangsmaterial eine Minderung der zugänglichen Oberfläche um mehr als 25% hingenommen werden musste. Presslinge aus pyrogen hergestelltem Aluminiumoxid (Al₂O₃-C) werden in der genannten Veröffentlichung ebenfalls beschrieben. Sie weisen eine Bruchfestigkeit von 5,6 kp (54,9 N) auf.

Die Herstellung von Presslingen aus pyrogen hergestellten Oxiden scheint demnach nur bei Inkaufnahme der geringen Bruchfestigkeit und der starken Abnahme der Oberfläche gegenüber dem Ausgangsmaterial möglich zu sein.

Die Aufgabe der Erfindung ist es, aus pyrogen hergestellten Oxiden Presslinge zu formen, die eine hohe Bruchfestigkeit und eine Oberfläche besitzen, die nur wenig unter der des Ausgangsmaterials liegt.

Gegenstand der Erfindung ist ein Verfahren zur Herstellung von Presslingen aus pyrogen hergestellten Oxiden, bei dem man das pyrogen hergestellte Oxid eines Metalls und/oder Metalloids vorlegt, dann intensiv mit Wasser, Kieselsol und einem Presshilfsmittel, vermengt, das Gemenge gegebenenfalls in Pulverform überführt, das so erhaltene fliessfähige Pulver durch Pressen formt, die erhaltenen Presslinge bei Temperaturen bis 100°C langsam vortrocknet und die vorgetrockneten Presslinge anschliessend bei Temperaturen von 450°–700°C tempert, welches dadurch gekennzeichnet ist, dass man als Presshilfsmittel einen mehrfunktionellen Alkohol verwendet.

Während der Vortrocknung wird das in den Presslingen vorhandene Wasser bis auf 10%, vorzugsweise 5% der ursprünglich im Gemenge eingesetzten Menge verdampft.

Zur Durchführung des erfindungsgemässen Verfahrens sind prinzipiell alle Mischer oder Mühlen geeignet, die eine gute Homogenisierung ermöglichen, wie z.B. Schaufel-, Wirbelschicht-, Kreisel- oder Luftstrommischer. Besonders geeignet sind Mischer, mit denen eine zusätzliche Verdichtung des Mischgutes möglich ist, z.B. Pflugscharmischer, Kollergänge oder Kugelmühlen.

Die flüssigen Komponenten können dabei auf das in den genannten Geräten vorgelegte Oxid aufgesprüht oder in sonst geeigneter Form eindosiert werden.

Es kann auch von Vorteil sein, in einem ersten Schritt einen Teil oder die gesamte Menge des zu verarbeitenden Oxides mit einem Teil der anderen Gemengebestandteile intensiv zu vermischen und dann in einem zweiten Schritt durch Zusatz der noch fehlenden Substanzmengen das Gemenge zur Herstellung der erfindungsgemässen Presslinge zu vervollständigen.

Als Presshilfsmittel werden mehrfunktionelle Alkohole eingesetzt, davon bevorzugt Äthandiol, Glycerin, Erythrite, Pentite, Hexite, wie z.B. Sorbit.

Die vorgetrockneten Presslinge können bei einer Temperatur von 450 bis 700°C, vorzugsweise von 500 bis 600°C getempert werden.

In weiteren bevorzugten Ausführungsformen des erfindungsgemässen Verfahrens werden als pyrogen hergestelltes Metalloid- bzw. Metalloxide Siliciumdioxid, Aluminiumoxid oder Titandioxid eingesetzt. Als Bindemittel findet Kieselsol Verwendung.

Als Beispiel für ein Kieselsol, das zur Herstellung der erfindungsgemäss hergestellten Presslinge dienen kann, ist Ludox HS 40® zu nennen, das durch folgende Daten charakterisiert wird:

| | |
|---|---:|
| Mittlere Teilchengrösse | 13–14 μm |
| Spez. Oberfläche | 210–230 m²/g |
| Wasseranteil | 60% |
| pH-Wert | 9,4 |

In einer bevorzugten Ausführungsform kann man einen Teil des Wassers auch in einer an eine pyrogen hergestellte, hydrophobierte Kieselsäure, wie z.B. Aerosil R 972® gebundenen Form dem Gemenge zusetzen.

In diesem Fall erhält man, ohne dass eine teilweise Verdampfung des eingesetzten Wassers notwendig wäre, ein freifliessendes Pulver, das anschliessend verpresst werden kann.

Die zur Herstellung des Gemenges mit geeigneter Konsistenz benötigten relativen Mengen der Bestandteile hängen in gewissem Masse von der Art des eingesetzten pyrogen hergestellten Oxids und der Grösse seiner spezifischen Oberfläche ab.

Es ist zweckmässig, den Wassergehalt des Gemenges zwischen 5 und 50 Gew.%, bezogen auf die Gesamtmenge, einzustellen. Der Gewichtsanteil des Presshilfsmittels kann zwischen 2 und 30% liegen, bevorzugt ist der Bereich zwischen 2 und 10 Gew.%. Liegt das Gemenge nach der Herstellung nicht in Pulverform vor, werden va. 40–55% des im Gemenge vorhandenen Wassers verdampft, bis man ein fliessfähiges Pulver erhält.

Die nach dem erfindungsgemässen Verfahren erzeugten Produkte können dann als Katalysatorträger eingesetzt werden.

Im allgemeinen bestehen 50–60% des Presslingvolumens aus zugänglichen Hohlräumen. Das bedeutet, dass z.B. Presslinge aus pyrogen hergestelltem Siliciumdioxid, die im Mittel ein Volumen von 0,38 cm³ besitzen, in Wasser etwa 0,22 cm³ Flüssigkeit aufnehmen.

Das erfindungsgemässe Verfahren weist weiterhin den Vorteil auf, dass die hergestellten Presslinge eine Bruchfestigkeit von mindestens 6 kp (58,8 N) besitzen und so z.B. in Katalysatorschüttungen gegen mechanischen Beanspruchung widerstandsfähig sind. Zugleich besitzen die Presslinge eine hohe Oberfläche, die nur in begrenztem Umfang den Oberflächenwert des Ausgangsoxides unterschreitet. Eine gewisse Abnahme dieses Wertes ist beim Verpressen unvermeidlich. Nach dem erfindungsgemässen Verfahren kann man diese Reduzierung auf maximal 18% des Ausgangswertes beschränken und dabei gleichzeitig eine hohe Bruchfestigkeit erzielen, wie oben gezeigt wurde.

Die folgenden Beispiele dienen zur näheren Erläuterung der vorliegenden Erfindung.

Die angegebenen Oberflächenwerte wurden nach DIN 66 131 bestimmt, die Bruchfestigkeit mit einem Bruchfestigkeitstester des Typs ZE/205 der Fa. Dr. K. Schlenniger & Co. gemessen.

Beispiel 1

10 g Aerosil 150® (spezifische Oberfläche 155 m²/g) werden in einem Pflugscharmischer mit einem Gemisch aus 130 g Wasser, 50 g Kieselsol Ludox HS 40 und 20 g Glycerin besprüht. Danach wird 10 min. gemischt. Das so erhaltene Gemenge wird 3 Stunden bei 90°C im Trockenschrank erhitzt, dabei verdampfen etwa 80 g Wasser. Das Pulver wird auf einer Korsch-Exzenterpresse mit einem Stempeldurchmesser von 9 mm, einer Matrizenfüllhöhe von 17 mm und einem Pressdruck von ca. 0,664 t verpresst.

Die Presslinge lässt man etwa 20 Stunden bei Raumtemperatur liegen, wobei der grösste Teil des Wassers (etwa 75 g) entweicht.

Die Presslinge werden 40 min bei 550°C getempert, wobei sie eine Bruchfestigkeit von 7,5 kp (73,5 N) erreichen. Die spezifische Oberfläche beträgt im Mittel 129 m²/g (= −16,8% gegenüber Aerosil 150). Die Presslinge nehmen pro Stück ca. 0,22 cm³ Wasser auf bei einem Gesamtvolumen von durchschnittlich 0,38 cm³. Das beeutet ein zugängliches Porenvolumen von 58%.

Beispiel 2

Verfahren wie Beispiel 1, nur unter Verwendung von 20 g Sorbitol und einer Temperatur von 600°C.

Die erhaltenen Presslinge zeigen ebenfalls eine Bruchfestigkeit von 7,5 kp (73,5 N). Die Oberfläche beträgt im Mittel 132 m²/g (≙ −14,8%). Die Presslinge nehmen pro Stück ca. 0,23 cm³ Wasser auf bei einem Gesamtvolumen von durchschnittlich ca. 0,38 cm³. Das bedeutet ein zugängliches Porenvolumen von 60%.

Beispiel 3 (Vergleichsbeispiel)

Verfahren wie Beispiel 1, nur ohne Presshilfsmittel.

Die Presslinge haben eine Bruchfestigkeit von 2 kp (19,6 N) und eine mittlere, spezifische Oberfläche von 131 m²/g (≙ −15,5%).

Beispiel 4

Wie Beispiel 1, nur mit Aerosil 200® (spezifische Oberfläche 212 m²/g), 170 g Wasser, 75 g Kieselsol Ludox HS 50® und 30 g Glycerin.

Die Presslinge weisen eine Bruchfestigkeit von 6 kp (59 N) und eine mittlere spezifische Oberfläche von 181 m³/g auf (≙ −14,6% gegenüber Aerosil 200).

Beispiel 5

Wie Beispiel 1, nur mit 100 g Aluminiumoxid C (pyrogen hergestelltes $Al_2O_3$) (spezifische Oberfläche 110 m³/g), 50 g Wasser, 20 g Kieselsol Ludox HS 40 und 5 g Glycerin.

Die Tabletten zeigen eine Bruchfestigkeit von 6 kp (59 N) und eine mittlere spezifische Oberfläche von 104 m³/g (≙ −5,5% gegenüber $Al_2O_3$-C).

Beispiel 6

In einem Kollergang werden 100 g Titandioxid P 25 (pyrogen hergestelltes $TiO_2$) (spezifische Oberfläche 46 m²/g) unter Mahlen langsam mit einem Gemisch aus 10 g Wasser, 10 g Kieselsol Ludox HS 40® und 5 g Glycerin vermengt.

Danach wird das Gemenge in einem Turbulanmischer mit 2,5 g eines Pulvers aus 15% Aerosil R 972® (hydrophobe pyrogene Kieselsäure) und 85% Wasser, vereinigt.

Das erhaltene fliessfähige Pulver wird auf einer Korsch-Exzenterpresse mit einem Stempeldurchmesser von 9 mm, einer Matrizenfüllhöhe von 17 mm und Pressdruck von ca. 0,5 t verpresst.

Die Presslinge lässt man etwa 20 Stunden bei Raumtemperatur trocknen. Danach werden sie 40 min bei 550°C getempert. Die Druckfestigkeit der fertigen Tabletten beträgt 15 kp (147 N) und die spezifische Oberfläche im Mittel 38 m²/g (≙ −17,4% gegenüber $TiO_2$ P 25).

**Patentansprüche**

1. Verfahren zur Herstellung von Presslingen aus pyrogen hergestellten Oxiden, bei dem man das pyrogen hergestellte Oxid eines Metalls und/oder Metalloids vorlegt, dann intensiv mit Wasser, Kieselsol und einem Presshilfsmittel vermengt, das Gemenge gegebenenfalls in Pulverform überführt, das so erhaltene fliessfähige Pulver durch Pressen formt, die erhaltenen Presslinge bei Temperaturen bis 100°C langsam vortrocknet und die vorgetrockneten Presslinge anschliessend bei Temperaturen von 450–700°C tempert, dadurch gekennzeichnet, dass man als Presshilfsmittel einen mehrfunktionellen Alkohol verwendet.

2. Verfahren nach Anspruch 1, dadurch gekennzeichnet, dass man als pyrogen hergestelltes Oxid Siliciumdioxid einsetzt.

3. Verfahren nach Anspruch 1, dadurch gekennzeichnet, dass man als pyrogen hergestelltes Oxid Aluminiumoxid einsetzt.

4. Verfahren nach Anspruch 1, dadurch gekennzeichnet, dass man als pyrogen hergestelltes Oxid Titandioxid einsetzt.

5. Verfahren nach Anspruch 1–4, dadurch gekennzeichnet, dass man ein Teil des Wassers in einer an eine pyrogen hergestellte, hydrophobierte Kieselsäure gebundenen Form zusetzt.

6. Verwendung des Presslings, erhalten nach dem Verfahren nach den Ansprüchen 1–5 als Katalysatorträger.

**Claims**

1. Process for the preparation of moulded articles from pyrogenically produced oxides, in which the pyrogenically produced oxide of a metal and/or metalloid is introduced, then intensively mixed with water, silica sol and a moulding auxiliary, the mixture is optionally converted into powder form, the flowable powder obtained in this manner is moulded by pressing, the moulded articles obtained are slowly pre-dried at temperatures up to 100°C, and the pre-dried moulded articles are then annealed at temperatures from 450 to 700°C, characterised in that a poly-functional alcohol is used as moulding auxiliary.

2. Process according to claim 1, characterised in that silicon dioxide is used as pyrogenically produced oxide.

3. Process according to claim 1, characterised in that aluminium oxide is used as pyrogenically produced oxide.

4. Process according to claim 1, characterised in that titanium dioxide is used as pyrogenically produced oxide.

5. Process according to claim 1 to 4, characterised in that part of the water is added in a form bound to a pyrogenically produced, hydrophobised silica.

6. Use of the moulded article, obtained by the process according to claims 1 to 5, as catalyst base.

**Revendications**

1. Procédé pour la fabrication de pièces pressées à partir d'oxydes fabriqués par la voie pyrogène, dans lequel on met en place un oxyde, fabriqué par pyrogénation, d'un métal ou d'un métalloïde, puis, mélange énergiquement avec l'eau, un sol de silice et un agent auxiliaire de pressage, fait passer éventuellement le mélange à la forme pulvérulente, moule par pressage la poudre fluide ainsi obtenue, fait subir aux pièces pressées, un pré-sèchage lent à des températures pouvant aller jusqu'à 100°C, et ensuite un traitement à la chaleur à des températures de 450 à 700°C, procédé caractérisé en ce que, comme agent auxiliaire de pressage, on utilise un alcool polyfonctionnel.

2. Procédé suivant la revendication 1, caractérisé en ce que comme oxyde fabriqué par la voie pyrogène, on utilise le dioxyde de silicium.

3. Procédé suivant la revendication 1, caractérisé en ce que, comme oxyde fabriqué par la voie pyrogène, on utilise de l'oxyde d'aluminium.

4. Procédé suivant la revendication 1, caractérisé en ce que, comme oxyde fabriqué par la voie pyrogène, on utilise le dioxyde de titane.

5. Procédé suivant les revendications 1 à 4, caractérisé en ce que l'on ajoute une partie de l'eau sous une forme où elle est combinée dans un acide silicique fabriqué par la voie pyrogène et rendu hydrophobe.

6. Utilisation de la pièce moulée, obtenue par le procédé suivant les revendications 1 à 5, comme support de catalyseurs.